# EUROPEAN PATENT SPECIFICATION

(11) **EP 2 870 447 B1**
(45) Date of publication and mention of the grant of the patent: **06.05.2020**
(21) Application number: 13812902.8
(22) Date of filing: 28.06.2013
(51) Int. Cl.: G01D 3/028, G01M 13/04, G01L 5/00, G01L 1/26

(54) **LOAD SENSING ARRANGEMENT ON A BEARING COMPONENT, METHOD AND COMPUTER PROGRAM PRODUCT**
LASTSENSORANORDNUNG AUF EINER TRÄGERKOMPONENTE, VERFAHREN UND COMPUTERPROGRAMMPRODUKT
SYSTÈME DE DÉTECTION DE LA CHARGE APPLIQUÉE À UN COMPOSANT DE PALIER, AINSI QUE PROCÉDÉ ET LOGICIEL CORRESPONDANTS

(30) Priority: 04.07.2012 SE 1200411
(43) Date of publication of application: 13.05.2015
(73) Proprietor: Aktiebolaget SKF (publ), 415 50 Göteborg (SE)
(72) Inventor: JOHANSSON, Mats, S-426 58 Västra Frölunda (SE); NGUYEN, Hanh, S-421 66 Västra Frölunda (US)
(74) Representative: Kuhstrebe, Jochen
(86) International application number: PCT/SE2013/000104
(87) International publication number: WO 2014/007714

(56) References cited:
- EP-A1- 1 930 708
- EP-A1- 1 930 708
- WO-A2-01/77634
- WO-A2-01/77634
- US-A- 4 118 933
- US-A- 5 140 849
- US-A- 5 952 587

## Description

### TECHNICAL FIELD

The present invention concerns a load sensing arrangement comprising at least one strain gauge configured to measure the load on a bearing component. The present invention also concerns a method for monitoring and/or optimizing a process in which such a load sensing arrangement is used. The present invention further concerns a computer program product that comprises a computer program containing computer program code means arranged to cause a computer or a processor to execute the steps of such a method.

### BACKGROUND OF THE INVENTION

There are a number of applications in which sensing the loads and types of loads placed on a bearing in operation can provide useful and significant information about the bearing and objects supported by the bearing.

Most load sensing arrangements comprise at least one strain gauge that is affixed to the bearing. A common type of strain gauge comprises of an insulating flexible backing which supports a metallic foil pattern. As the bearing is deformed, the metallic foil is deformed, causing its electrical resistance to change. This change in electrical resistance, which is usually measured using a Wheatstone bridge, may be used to determine the load on the bearing.

If a bearing is subjected to variations in temperature or a temperature gradient during its use, thermal expansion will cause the bearing to change in size, which will be detected as a strain by the gauge. Many strain gauges are therefore provided with temperature compensation means in order to compensate for, or offset changes in the electrical resistance of the strain gauge which are due to the expansion/contraction of the bearing caused by temperature fluctuations or a temperature gradient.

For example, PCT-publication no. WO 01/23862 describes a system for monitoring the operating conditions of a tapered roller bearing which comprises a plurality of strain sensors located in a groove in the fixed race of the tapered roller bearing. A temperature sensor is located in the groove to counteract and offset the changes in electrical resistance of the strain sensor which are produced by temperature variations.

US patent 4 118 933 discloses a bearing load indicator comprising pairs of strain gauges wherein one strain gauge (a "dummy strain gauge") in each pair is mounted so as not to respond to the strain, but to serve as a temperature compensator. The temperature compensating strain gauge in each pair of strain gauges is not completely affixed to the support yoke of a bearing but is attached thereto so as to be subjected solely to the temperature at that location, while the other strain gauge in each pair is normally affixed to the support yoke of the bearing and is subjected to both the load on the support yoke and the temperature thereof.

WO 01/77634 (A2) relates to a bearing assembly which monitors forces and torques transmitted through it to provide electrical signals for use by devices which monitor and control vehicular dynamics based upon calculated tire patch loading or to determine the general stresses, strains, and loads placed upon a bearing. It comprises a sensor module which includes a strain gauge and a temperature compensator, and the temperature compensator operates at the same temperature as the strain gauge and is located adjacent to the strain gauge.

EP 1 930 708 A1 relates to a sensor-incorporated wheel support bearing assembly equipped with a load sensor for detecting a load acting on a bearing portion of a wheel. It comprises a strain sensor and a temperature sensor, and the temperature characteristics of the strain sensor are compensated based on the output from the temperature sensor.

### SUMMARY OF THE INVENTION

An object of the invention is to provide an improved load sensing arrangement comprising at least one strain gauge at a strain gauge location, the at least one strain gauge being configured to measure the load on a bearing component, and temperature compensation means arranged to compensate for the influence of temperature on measurements made by the at least one strain gauge.

This object is achieved by the subject-matter according to claim 1.

Such a load sensing arrangement does not therefore require any apparatus for measuring data, such as the temperature, at the at least one strain gauge location, such as a temperature sensor or a dummy strain gauge, to be placed at the at least one strain gauge location together with the at least one strain gauge. The influence of temperature at the strain gauge location is instead determined using other data received by the temperature compensation means.

The temperature at the strain gauge location need not necessarily be determined. Only the influence of temperature in some part of a bearing component on the measurements made by the strain gauge needs to be determined. For example, if the top of a bearing housing is subjected to a high temperature, the top of the bearing housing may expand. This may give rise to strain within the bearing housing, which must be compensated for in order to obtain accurate strain gauge measurements.

According to the invention the temperature compensation means comprises at least one temperature sensor that is arranged to measure at least one temperature at at least one location remote from the at least one strain gauge and use the measured remote temperature data to determine the variable indicative of the influence of the at least one measured temperature on measurements made by the at least one strain gauge.

Additionally, or alternatively the temperature compensation means is arranged to determine the variable using process parameter data. The at least one strain gauge may namely be configured to measure the load on a bearing component of at least one of the following: continuous casting apparatus, apparatus used in mining, or an application in which the bearing component is at least temporarily exposed to temperatures over 50-60°C, over 100°C, over 200°C, over 300°C, over 500°C or over 700°C when in use.

In such a case, no temperature measurement needs to be made at all. For example, process parameters that are measured or determined while the at least one strain gauge is making measurements, or process parameters that have been measured or determined previously for the same or similar apparatus and/or during the same or a similar process and/or under similar conditions may be used to determine the variable. Process parameters may be measured directly, and/or determined using a process simulation model or a Finite Element Method (FEM).

The process parameter data may be any data that allows a variable indicative of the influence of said data on measurements made by said at least one strain gauge to be determined directly or indirectly therefrom. In a continuous casting process, such process parameter data may include at least one of the following: strand temperature data, strand position data, strand size data, pressure data, vibration data, casting speed data, molten metal temperature data, room temperature data.

The load sensing arrangement according to the present invention may be used to monitor and/or optimize a system and/or a process in which at least one bearing component is used. For example, the useful lifetime of a bearing component used in a certain system and/or a certain process and/or under certain conditions may be more accurately determined using a load sensing arrangement according to the present invention.

It should be noted that the at least one strain gauge of the load sensing means according to the present invention need not necessarily be arranged to measure electrical resistance but can be any type of strain gauge whose measurements are adversely affected if it is at least temporarily subjected to temperature fluctuations, or a temperature gradient during its use, especially but not exclusively when subjected to temperature fluctuations of 50-60°C or more.

According to an embodiment of the invention the measured temperature data and/or process parameter data is used in a temperature compensation algorithm that determines the amount of temperature compensation required.

According to the invention, the expression "temperature compensation" as used in this document is intended to mean that a strain gauge measurement is changed, corrected, calibrated, offset or manipulated in some way in order to reduce or eliminate the effect of expansion or contraction of a bearing component caused by temperature fluctuations. Temperature compensation thereby decreases the sensitivity of a strain gauge to strains caused by temperature fluctuations or temperature gradients and consequently increases the accuracy of measurements made by the strain gauge. This temperature compensation may be arranged to take place while measurements are being made by at least one strain gauge (so that changes to a process may be made while a process is taking place), or after measurements have been made (so that changes can be made subsequently).

The present invention also concerns a method for optimizing a process in which a load sensing arrangement comprising at least one strain gauge at a strain gauge location, the at least one strain gauge being used to measure the load on a bearing component. The method comprises the step of receiving data and determining a variable indicative of the influence of said data on measurements made by said at least one strain gauge in order to determine the amount of temperature compensation required to compensate for the influence of temperature on measurements made by the at least one strain gauge.

According to the invention the method comprises the steps of measuring at least one temperature at at least one location remote from the at least one strain gauge, and using the measured temperature data to determine the variable.

Additionally, or alternatively the method comprises the step of determining the variable using process parameter data.

According to another embodiment of the invention the method comprises the step of using the measured temperature data and/or process parameter data in a temperature compensation algorithm that determines the amount of temperature compensation required.

According to a further embodiment of the invention the method is used to monitor and/or optimize at least one of the following: a continuous casting process, a mining process or any process in which the bearing component is at least temporarily exposed to temperatures over 50-60°C when in use.

The present invention also concerns a computer program product that comprises a computer program containing computer program code means arranged to cause a computer or a processor to execute the steps of a method according to any of the embodiments of the invention, stored on a computer-readable medium or a carrier wave.

### BRIEF DESCRIPTION OF THE DRAWINGS

The present invention will hereinafter be further explained by means of non-limiting examples with reference to the appended schematic figures where;
- Figure 1: shows a continuous casting apparatus,
- Figures 2 & 3: shows roll lines of a continuous casting apparatus,
- Figure 4: shows a load sensing arrangement according to an embodiment of the invention, and
- Figure 5: shows the steps of a method according to an embodiment of the invention.

It should be noted that the drawings have not been drawn to scale and that the dimensions of certain features have been exaggerated for the sake of clarity.

### DETAILED DESCRIPTION OF EMBODIMENTS

Any number of load sensing arrangements according to the present invention may be used to monitor and/or optimize a process in which a bearing component is used. A load sensing arrangement comprising a plurality of strain gauges, such as 20 to 50 strain gauges may for example be used to monitor and/or optimize a continuous casting process.

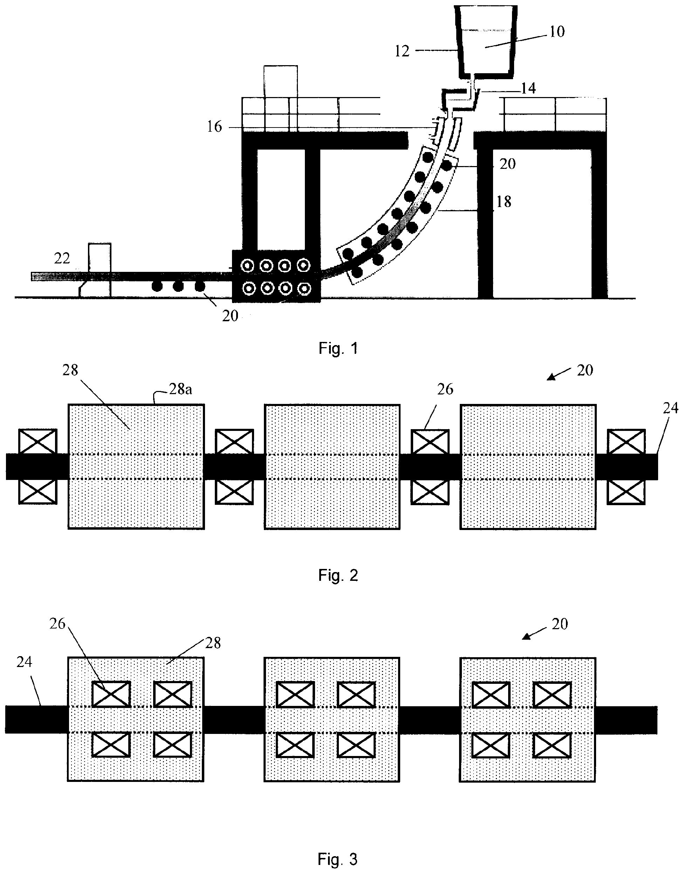

Figure 1 shows a continuous casting process in which molten metal 10 is tapped into a ladle 12. After undergoing any ladle treatments, such as alloying and degassing, and arriving at the correct temperature, molten metal 10 from the ladle 12 is transferred via a refractory shroud to a tundish 14. Metal is drained from the tundish 14 into the top of an open-base mould 16. The mould 16 is water-cooled to solidify the molten metal directly in contact with it. In the mould 16, a thin shell of metal next to the mould walls solidifies before the middle section, now called a strand, exits the base of the mould 16 into a cooling chamber 18; the bulk of metal within the walls of the strand is still molten. The strand is supported by closely spaced, water cooled roll lines 20 which act to support the walls of the strand against the ferrostatic pressure of the still-solidifying liquid within the strand.

The surface temperature of a strand may be 800-900°C as it passes over the roll lines 20, which will adversely affect the accuracy of measurements made by a strain gauge measuring the load on a bearing component of the roll lines 20. An inaccurate strain measurement may namely be made just after a strand has passed over a bearing component of a roll line 20.

To increase the rate of solidification, the strand is sprayed with large amounts of water as it passes through the cooling chamber 18. Final solidification of the strand may take place after the strand has exited the cooling chamber 18.

In the illustrated embodiment the strand exits the mould 16 vertically (or on a near vertical curved path) and as it travels through the cooling chamber 18, the roll lines 20 gradually curve the strand towards the horizontal. (In a vertical casting machine, the strand stays vertical as it passes through the cooling chamber 18). After exiting the cooling chamber 18, the strand passes through straightening roll lines (if cast on other than a vertical machine) and withdrawal roll lines. Finally, the strand is cut into predetermined lengths by mechanical shears or by travelling oxyacetylene torches 22 and either taken to a stockpile or the next forming process. In many cases the strand may continue through additional roll lines and other mechanisms which might flatten, roll or extrude the metal into its final shape.
Figures 2 and 3 shows examples of roll lines 20 for continuous casting apparatus in which load sensing arrangements according to the present invention may be used. The load sensing arrangement according to the present invention may however be used to monitor and/or optimize a bearing component located anywhere in a system, and/or used in any process.

Figure 2 shows a roll line 20 that comprises a shaft 24 supported by bearings housed in bearing housings 26, and three roll mantles 28 for transporting a metal strand along the outer surface 28a thereof, which are arranged to be fixedly supported on the shaft 24.

Figure 3 shows a roll line 20 according to another embodiment of the present invention. The roll line 20 comprises a non-rotating shaft 24 and three roll mantles 28 for transporting a metal strand along the outer surface 28a thereof, which are arranged to be rotatably supported on the shaft 24 by means of bearings 26 located inside the roll mantles 28.

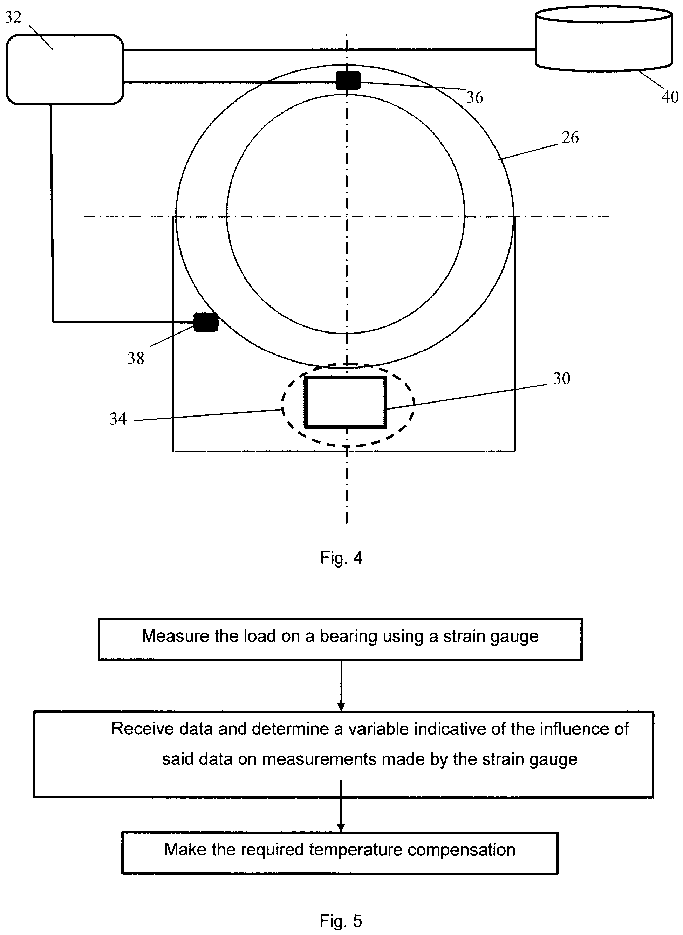

Figure 4 shows a load sensing arrangement according to an embodiment of the present invention. The load sensing arrangement comprises a strain gauge 30 configured to measure the load on a bearing component, such as a bearing housing 26 at least temporarily subjected to a temperature gradient during its use, and temperature compensation means 32 arranged to compensate for the influence of temperature on measurements made by the strain gauge 30. The temperature compensation means 32 is configured to receive data and determine a variable indicative of the influence of said data on measurements made by the at least one strain gauge 30.

The temperature compensation means 32 comprises a plurality of temperature sensors 36, 38 arranged for example at the top of the bearing housing 26 and/or behind the raceway of one of the bearing's races. The temperature sensors 36, 38 are arranged to measure the temperature at a location remote from the strain gauge 30 and send this information to the temperature compensation means 32 which then uses that measured temperature data to determine said variable.

Alternatively, or additionally, the temperature compensation means 32 is arranged to receive data concerning any number of process parameters and determine the variable using that process parameter data, namely any suitable data concerning a process, such as continuous casting, a mining process or any process in which the bearing component is at least temporarily exposed to temperatures over 50-60°C when in use. The load sensing arrangement may comprise a memory 40 and such process parameter data may be stored in a memory 40. The process parameter data may be collected and/or determined in real time or it may have been measured and/or determined during one or more previously run processes to be used in subsequent processes.

According to an embodiment of the invention measured temperature data from remote temperature sensors 36, 28 and/or process parameter data is used in a temperature compensation algorithm that determines the amount of temperature compensation required.

The components of the load sensing arrangement according to the present invention, namely the at least one strain gauge 30, the at least one remote temperature sensor 36, 38, the memory 40 and the temperature compensation means 32 may be connected wirelessly and/or in a wired manner. Furthermore, the components of the load sensing arrangement according to the present invention need not necessarily be separate components. The temperature compensation means 32 may for example be integrally formed with the memory 40 for example and/or at least one of the remote temperature sensor 36, 38. One or more parts of the load sensing arrangement according to the present invention may be integrally formed in a bearing component 26.

The bearing component may for example be any part of a bearing that is subjected to a load during its use, such as a bearing housing or a raceway. The bearing component may be at least one part of a roller, plain bearing, bushing, journal bearing, sleeve bearing, slewing bearing or a rolling element bearing, such as a ball bearing or roller bearing, a cylindrical roller bearing, a spherical roller bearing, a toroidal roller bearing, a taper roller bearing, a conical roller bearing or a needle roller bearing.

The temperature compensation means 32 may be located in the vicinity of one or more bearing components 26 that are to be monitored or remotely thereto. The temperature compensation means 32 may be constituted by a computer program product comprising a computer program containing computer program code means arranged to cause a computer or a processor to execute the steps of a method according to any of the embodiments of the present invention. It should be noted that a single temperature compensation means 32 may be used to make the required temperature compensation for any number of strain gauges 30 used in any number of systems or processes in which at least one bearing component 26 is used.

Figure 5 shows the steps of a method for optimizing a process in which a load sensing arrangement comprising at least one strain gauge 30 is used to measure the load on a bearing component 26. The method comprises the step of measuring the load on a bearing using a strain gauge, receiving data and determining a variable indicative of the influence of said data on measurements made by said at least one strain gauge 30 and making the required temperature compensation. It should be noted that the load on a bearing component 26 may optionally be measured only after a variable indicative of the temperature at the strain gauge location 34 has been determined.

According to an embodiment of the invention the method comprises the steps of measuring at least one temperature at at least one location remote from the strain gauge 30, and using the measured temperature data to determine the a variable indicative of the influence of said data on measurements made by said at least one strain gauge 30. Alternatively, the method comprises the step of determining the variable using process parameter data. Measured temperature data and/or process parameter data may be used in a temperature compensation algorithm that determines the amount of temperature compensation required.

Further modifications of the invention within the scope of the claims would be apparent to a skilled person.

## Claims

1. Load sensing arrangement comprising at least one strain gauge (30) at a strain gauge location (34), the at least one strain gauge (30) being configured to measure the load on a bearing component (26), whereby said load sensing arrangement comprises temperature compensation means (32) arranged to compensate for the influence of temperature on measurements made by said at least one strain gauge (30), wherein said temperature compensation means (32) is configured to receive data and to determine a variable indicative of the influence of said data on measurements made by said at least one strain gauge (30), wherein said temperature compensation means (32) comprises at least one temperature sensor (36, 38) that is arranged to measure at least one temperature at at least one location remote from said at least one strain gauge (30) and use the measured data to determine said variable indicative of the influence of said at least one measured temperature on measurements made by said at least one strain gauge (30), **characterized in that** the temperature compensation means is arranged to change, correct, calibrate, offset or manipulate the measurements made by said at least one strain gauge in order to reduce or eliminate the effect of expansion and contraction of the bearing component caused by temperature fluctuations or temperature gradients.

2. Load sensing arrangement according to claim 1, **characterized in that** said at least one strain gauge (30) is configured to measure the load on a bearing component (26) of at least one of the following: continuous casting apparatus, apparatus used in mining, or an application in which said bearing component (26) is at least temporarily exposed to temperatures over 50-60°C when in use.

3. Load sensing arrangement according to any of the preceding claims, **characterized in that** said temperature compensation means (32) is arranged to determine said variable using process parameter data from a continuous casting process, wherein the process parameter data include at least one of the following: strand temperature data, strand position data, strand size data, vibration data, casting speed data, molten metal temperature data, room temperature data.

4. Load sensing arrangement according to claim 1 or 2, **characterized in that** said measured temperature data and/or process parameter data is used in a temperature compensation algorithm that determines the amount of temperature compensation required.

5. Method for optimizing a process in which a load sensing arrangement comprising at least one strain gauge (30) at a strain gauge location (34), the at least one strain gauge (30) being used to measure the load on a bearing component (26), wherein the method comprises the step of receiving data and determining a variable indicative of the influence of said data on measurements made by said at least one strain gauge (30), wherein the method further comprises the steps of measuring at least one temperature at at least one location remote from said at least one strain gauge (30), and using the measured temperature data to determine said variable indicative of the influence of said at least one temperature on measurements made by said at least one strain gauge (30), **characterized in that** the measured temperature data is used to change, correct, calibrate, offset or manipulate the measurements made by said at least one strain gauge in order to reduce or eliminate the effect of expansion and contraction of the bearing component caused by temperature fluctuations or temperature gradients.

6. Method according to claim 5, **characterized in that** it is used to monitor and/or optimize at least one of the following: a continuous casting process, a mining process or any process in which said bearing component (26) is at least temporarily exposed to temperatures over 50-60°C when in use.

7. Method according to any of claims 5-6, **characterized in that** it comprises the step of determining said variable using process parameter data from a continuous casting process, wherein the process parameter data include at least one of the following: strand temperature data, strand position data, strand size data, vibration data, casting speed data, molten metal temperature data, room temperature data.

8. Method according to claim 5 or 6, **characterized in that** it comprises the step of using said measured temperature data and/or process parameter data in a temperature compensation algorithm that determines the amount of temperature compensation required.

9. Computer program product, **wherein** it comprises a computer program containing computer program code means arranged to cause a computer or a processor to execute the steps of a method according to any of claims 5-8, stored on a computer-readable medium or a carrier wave.

## Patentansprüche

1. Lasterfassungsanordnung, die mindestens einen Dehnungsmessstreifen (30) an einem Dehnungsmessstreifenort (34) umfasst, wobei der mindestens eine Dehnungsmessstreifen (30) konfiguriert ist, die Last auf eine Lagerkomponente (26) zu messen, wobei die Lasterfassungsanordnung Temperaturausgleichsmittel (32) umfasst, die dafür ausgelegt sind, den Einfluss von Temperatur auf Messungen, die durch den mindestens einen Dehnungsmessstreifen (30) vorgenommen werden, auszugleichen, wobei die Temperaturausgleichsmittel (32) konfiguriert sind, Daten zu empfangen und eine Variable zu bestimmen, die den Einfluss der Daten auf Messungen, die durch den mindestens einen Dehnungsmessstreifen (30) vorgenommen werden, angibt, wobei die Temperaturausgleichsmittel (32) mindestens einen Temperatursensor (36, 38) umfassen, der dafür ausgelegt ist, mindestens eine Temperatur an einem Ort entfernt von dem mindestens einen Dehnungsmessstreifen (30) zu messen und die gemessenen Daten zu verwenden, um die Variable zu bestimmen, die den Einfluss der mindestens einen gemessenen Temperatur auf Messungen, die durch den mindestens einen Dehnungsmessstreifen (30) vorgenommen werden, angibt, **dadurch gekennzeichnet, dass** die Temperaturausgleichsmittel dafür ausgelegt sind, die Messungen, die durch den mindestens einen Dehnungsmessstreifen vorgenommen werden, zu ändern, zu korrigieren, zu kalibrieren, zu verschieben oder zu manipulieren, um die Auswirkungen von Ausdehnen und Zusammenziehen der Lagerkomponente, die durch die Temperaturschwankungen oder Temperaturgradienten bewirkt werden, zu verringern oder zu beseitigen.

2. Lasterfassungsanordnung nach Anspruch 1, **dadurch gekennzeichnet, dass** der mindestens eine Dehnungsmessstreifen (30) konfiguriert ist, die Last auf eine Lagerkomponente (26) von mindestens einer der Folgenden zu messen: Stranggussvorrichtung, Vorrichtung, die im Bergbau verwendet wird, oder einer Anwendung, bei der die Lagerkomponente (26) bei der Verwendung zumindest zeitweise Temperaturen über 50-60 °C ausgesetzt ist.

3. Lasterfassungsanordnung nach einem der vorhergehenden Ansprüche, **dadurch gekennzeichnet, dass** die Temperaturausgleichsmittel (32) dafür ausgelegt sind, die Variable unter Verwendung von Prozessparameterdaten von einem Stranggussprozess zu bestimmen, wobei die Prozessparameterdaten mindestens einige der Folgenden enthalten: Strangtemperaturdaten, Strangpositionsdaten, Stranggrößendaten, Vibrationsdaten, Gussgeschwindigkeitsdaten, Metallschmelzetemperaturdaten, Raumtemperaturdaten.

4. Lasterfassungsanordnung nach Anspruch 1 oder 2, **dadurch gekennzeichnet, dass** die gemessenen Temperaturdaten und/oder Prozessparameterdaten in einem Temperaturausgleichsalgorithmus verwendet werden, der die erforderliche Temperaturausgleichsmenge bestimmt.

5. Verfahren zum Optimieren eines Prozesses, bei dem eine Lasterfassungsanordnung mindestens einen Dehnungsmessstreifen (30) an einem Dehnungsmessstreifenort (34) umfasst, wobei der mindestens eine Dehnungsmessstreifen (30) verwendet wird, um die Last auf eine Lagerkomponente (26) zu messen, wobei das Verfahren den Schritt des Empfangens von Daten und das Bestimmen einer Variable, die den Einfluss von Daten auf Messungen, die durch den mindestens einen Dehnungsmessstreifen (30) vorgenommen werden, angibt, umfasst, wobei das Verfahren ferner die Schritte zum Messen von mindestens einer Temperatur an mindestens einem Ort entfernt von dem mindestens einen Dehnungsmessstreifen (30) und zum Verwenden der gemessenen Temperaturdaten, um die Variable zu bestimmen, die den Einfluss der mindestens einen Temperatur auf Messungen, die durch den mindestens Dehnungsmessstreifen (30) vorgenommen werden, angibt, umfasst, **dadurch gekennzeichnet, dass** die gemessenen Temperaturdaten verwendet werden, um die Messungen, die durch den mindestens einen Dehnungsmessstreifen vorgenommen werden, zu ändern, zu korrigieren, zu kalibrieren, zu verschieben oder zu manipulieren, um die Auswirkungen von Ausdehnen und Zusammenziehen der Lagerkomponente, die durch die Temperaturschwankungen oder Temperaturgradienten bewirkt werden, zu verringern oder zu beseitigen.

6. Verfahren nach Anspruch 5, **dadurch gekennzeichnet, dass** es verwendet wird, um mindestens einen der folgenden zu überwachen und/oder zu optimieren: einen Stranggussprozess, einen Bergbauprozess oder einen Prozess, bei dem die Lagerkomponente (26) bei der Verwendung zumindest zeitweise Temperaturen über 50-60 °C ausgesetzt ist.

7. Verfahren nach einem der Ansprüche 5-6, **dadurch gekennzeichnet, dass** es den Schritt des Bestimmens der Variable unter Verwendung von Prozessparameterdaten von einem Stranggussprozess umfasst, wobei die Prozessparameterdaten mindestens einige der Folgenden enthalten: Strangtemperaturdaten, Strangpositionsdaten, Stranggrößendaten, Vibrationsdaten, Gussgeschwindigkeitsdaten, Metallschmelzetemperaturdaten, Raumtemperaturdaten.

8. Verfahren nach Anspruch 5 oder 6, **dadurch gekennzeichnet, dass** es den Schritt des Verwendens der gemessenen Temperaturdaten und/oder Prozessparameterdaten in einem Temperaturausgleichsalgorithmus umfasst, der die erforderliche Temperaturausgleichsmenge bestimmt.

9. Computerprogrammprodukt, das ein Computerprogramm umfasst, das Computerprogrammcodemittel enthält, die dafür ausgelegt sind, zu bewirken, dass ein Computer oder ein Prozessor die Schritte eines Verfahrens nach einem der Ansprüche 5-8 ausführt, die auf einem computerlesbaren Medium oder einer Trägerwelle gespeichert sind.

## Revendications

1. Agencement capteur de charge, comprenant au moins une jauge de contrainte (30) à un emplacement (34) de jauge de contrainte, l'au moins une jauge de contrainte (30) étant configurée pour mesurer la charge sur un composant de palier (26), ledit agencement capteur de charge comprenant des moyens de compensation de température (32) conçus de manière à compenser l'influence de la température sur des mesures effectuées par ladite au moins une jauge de contrainte (30), lesdits moyens de compensation de température (32) étant configurés pour recevoir des données et pour déterminer une variable indiquant l'influence desdites données sur des mesures effectuées par ladite au moins une jauge de contrainte (30), lesdits moyens de compensation de température (32) comprenant au moins un capteur de température (36, 38) qui est conçu de manière à mesurer au moins une température à au moins un emplacement distant de ladite au moins une jauge de contrainte (30) et utiliser les données mesurées pour déterminer ladite variable indiquant l'influence de ladite au moins une température mesurée sur des mesures effectuées par ladite au moins une jauge de contrainte (30), **caractérisé en ce que** les moyens de compensation de température sont conçus de manière à modifier, corriger, étalonner, compenser ou manipuler les mesures effectuées par ladite au moins une jauge de contrainte dans le but de réduire ou d'annuler l'effet de dilatation et de contraction du composant de palier dû à des fluctuations de température ou à des gradients de température.

2. Agencement capteur de charge selon la revendication 1, **caractérisé en ce que** ladite au moins une jauge de contrainte (30) est configurée pour mesurer la charge sur un composant de palier (26) d'au moins élément dans le groupe constitué par : un appareil de coulée en continu, un appareil utilisé en exploitation minière ou une application dans laquelle ledit composant de palier (26) est au moins temporairement exposé à des températures au-delà de 50-60°C en cours d'utilisation.

3. Agencement capteur de charge selon l'une quelconque des revendications précédentes, **caractérisé en ce que** lesdits moyens de compensation de température (32) sont conçus de manière à déterminer ladite variable à l'aide de données de paramètres de processus issues d'un processus de coulée en continu, les données de paramètres de processus comportant au moins un élément dans le groupe constitué par : des données de température de ligne de coulée, des données de position de ligne de coulée, des données de taille de ligne de coulée, des données de vibration, des données de vitesse de coulée, des données de température de métal fondu, des données de température ambiante.

4. Agencement capteur de charge selon la revendication 1 ou 2, **caractérisé en ce que** lesdites données de température mesurée et/ou lesdites données de paramètres de processus sont utilisées dans un algorithme de compensation de température qui détermine la quantité de compensation de température nécessaire.

5. Procédé d'optimisation d'un processus dans lequel un agencement capteur de charge comprenant au moins une jauge de contrainte (30) à un emplacement (34) de jauge de contrainte, l'au moins une jauge de contrainte (30) étant utilisée pour mesurer la charge sur un composant de palier (26), le procédé comprenant l'étape de réception de données et de détermination d'une variable indiquant l'influence desdites données sur des mesures effectuées par ladite au moins une jauge de contrainte (30), le procédé comprenant en outre les étapes de mesure d'au moins une température à au moins un emplacement distant de ladite au moins une jauge de contrainte (30) et d'utilisation des données de température mesurée pour déterminer ladite variable indiquant l'influence de ladite au moins une température sur des mesures effectuées par ladite au moins une jauge de contrainte (30), **caractérisé en ce que** les données de température mesurée sont utilisées pour modifier, corriger, étalonner, compenser ou manipuler les mesures effectuées par ladite au moins une jauge de contrainte dans le but de réduire ou d'annuler l'effet de dilatation et de contraction du composant de palier dû à des fluctuations de température ou à des gradients de température.

6. Procédé selon la revendication 5, **caractérisé en ce qu'**il est utilisé pour surveiller et/ou optimiser au moins élément dans le groupe constitué par : un processus de coulée en continu, un processus d'exploitation minière ou tout processus dans lequel ledit composant de palier (26) est au moins temporairement exposé à des températures au-delà de 50-60°C en cours d'utilisation.

7. Procédé selon l'une quelconque des revendications 5 et 6, **caractérisé en ce qu'**il comprend l'étape de détermination de ladite variable à l'aide de données de paramètres de processus issues d'un processus de coulée en continu, les données de paramètres de processus comportant au moins un élément dans le groupe constitué par : des données de température de ligne de coulée, des données de position de ligne de coulée, des données de taille de ligne de coulée, des données de vibration, des données de vitesse de coulée, des données de température de métal fondu, des données de température ambiante.

8. Procédé selon la revendication 5 ou 6, **caractérisé en ce qu'**il comprend l'étape d'utilisation desdites données de température mesurée et/ou desdites données de paramètres de processus dans un algorithme de compensation de température qui détermine la quantité de compensation de température nécessaire.

9. Produit-programme d'ordinateur, **lequel** comprend un programme d'ordinateur contenant des moyens formant code de programme d'ordinateur conçus de manière à amener un ordinateur ou un processeur à exécuter les étapes d'un procédé selon l'une quelconque des revendications 5 à 8, enregistré sur un support lisible par ordinateur ou une onde porteuse.
